(19) Europäisches Patentamt
European Patent Office
Office européen des brevets

(11) Veröffentlichungsnummer : **0 054 748**
**B1**

(12) # EUROPÄISCHE PATENTSCHRIFT

(45) Veröffentlichungstag der Patentschrift : **26.09.84**

(51) Int. Cl.³ : **C 07 F 7/18**// B03D1/00

(21) Anmeldenummer : **81109820.1**

(22) Anmeldetag : **21.11.81**

(54) **Verfahren zum Herstellen von wässrigen Lösungen kationischer Organosiliciumverbindungen.**

(30) Priorität : **19.12.80 DE 3047994**

(43) Veröffentlichungstag der Anmeldung : **30.06.82 Patentblatt 82/26**

(45) Bekanntmachung des Hinweises auf die Patenterteilung : **26.09.84 Patentblatt 84/39**

(84) Benannte Vertragsstaaten : **BE CH DE FR GB IT LI NL**

(56) Entgegenhaltungen :
**DE-A- 2 648 240**
**US-A- 4 005 118**
**US-A- 4 005 119**

(73) Patentinhaber : **Degussa Aktiengesellschaft**
**Weissfrauenstrasse 9**
**D-6000 Frankfurt am Main 1 (DE)**

(72) Erfinder : **Karl, Alfons, Dr. Dipl.-Chem.**
**Birkenweg 1**
**D-6450 Hanau 1 (DE)**
Erfinder : **Buder, Wolfgang, Dr. Dipl.-Chem.**
**In der Gartel 1**
**D-6458 Rodenbach 1 (DE)**
Erfinder : **Kleinschmit, Peter, Dr. Dipl.-Chem.**
**Wildaustrasse 19**
**D-6450 Hanau 9 (DE)**

**EP 0 054 748 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf ein Verfahren zur Herstellung von wässrigen Lösungen kationischer Organosiliciumverbindungen.

Bekannt sind zahlreiche Literaturstellen, die sich mit derartigen Organosiliciumverbindungen und deren Herstellung (z. B. DE-PS 881 654, NE-OS 6 517 163, DE-PS 1 262 272, DE-OS 2 221 349, DE-OS 2 648 240, US-PS 4 035 411, 4 005 118 und 4 005 119) sowie mit deren Anwendungen in wäßrigen Medien z. B. zur Bekämpfung des Algenwachstums (DE-OS 2 222 997 und 2 229 580), zur Verbesserung der Anfärbbarkeit von Textilfasern (GB-PS 882 067) oder zur Hemmung des Wachstums von Bakterien und Fungi (DE-AS 2 408 192 und EUR. J. MED. CHEM. CHIMICA THERAPEUTICA 1979-*14*, pp. 399-406) befassen.

Bei den bekannten Herstellungsverfahren werden Alkoxysilylalkylhalogenide mit Aminen wie unter anderem tertiären Aminen direkt miteinander, also ohne Lösungsmittel, umgesetzt. Werden dagegen Lösungsmittel mitverwendet, so sind es organische Lösungsmittel wie niedrige aliphatische Alkohole, flüssige aliphatische und aromatische Kohlenwasserstoffe, Ketone und dergleichen.

In der DE-PS 881 654 wird vorgeschrieben, die Umsetzung bei Abwesenheit von Wasser durchzuführen (siehe zum Beispiel Anspruch 1). Dieser Patentschrift entspricht die GB-PS 686 068.

Nach der niederländischen Patentanmeldung 6 517 163 werden ebenfalls organische Lösungsmittel eingesetzt. Es wird ausgeführt, daß auch Feuchtigkeit vermieden werden muß (Seite 6, Zeile 23).

Gemäß der DE-PS 12 62 272 wird die Synthese in Gegenwart eines inerten polaren Lösungsmittels wie Acetonitril, Dimethylformamid, Benzonitril und Dimethylsulfoxid ausgeführt. Wasser wird nicht erwähnt. Ähnliches gilt auch für den Inhalt der DE-OS 22 21 349.

Des DE-OS 26 48 240 ist die Aufgabe zu entnehmen, ein neues, wirtschaftliches Verfahren zur Herstellung von Organosilyalminhydrochloriden zu schaffen. Die Herstellung aus Chloralkylsilanen und primären oder sekundären Aminen im Molverhältnis von 1 zu wenigstens 2 erfolgt in Gegenwart eines niederen aliphatischen Alkohols. Das nicht umgesetzte Amin wird nach Beendigung der Reaktion aus der Reaktionzone abgetrieben. Erst danach wird die gewünschte wässrige Lösung des Umsetzungsproduktes hergestellt, wobei die Alkoxysilylgruppen der Hydrolyse unterliegen. Man erhält auf diese Weise insbesondere Produkte, die stabile konzentrierte wäßrige Lösungen bilden.

Zum Inhalt der oben zitierten US-PS 4 035 411 wird ausgeführt, daß die beiden Ausgangsverbindungen entweder direkt, also ohne Gegenwert eines Lösungsmittels oder in Gegenwart eines inerten organischen Lösungsmittels miteinander zur Reaktion gebracht werden (Spalte 4, Zeilen 6 bis 10). Als inerte Lösungsmittel werden 2-Butanon oder trockenes Hexan eingesetzt. Analoges gilt für die Synthesen, die in den USA-Patentschriften 4 005 118 und 4 005 119 offenbart werden.

Es wurde nun überraschender Weise gefunden, daß eine entsprechende Synthese in wässrigem Medium ausgeführt werden kann. Es wurden Anzeichen dafür gefunden, daß Wasser bei der vorliegenden Synthese reaktionsbeschleunigend wirkt. Das beanspruchte Verfahren zur Herstellung Wässriger Lösungen kationische Organosiliziumverbindungen durch Umsetzung von Silylverbindungen der Formel

$$(RO)_{3-n}R^1Si—R^2—X \qquad (I)$$

in der bedeuten

R = $C_1$- bis $C_5$-Alkyl, Phenyl und $C_5$- bis $C_8$-Cycloalkyl ;

$R^1$ = $C_1$- bis $C_5$-Alkyl, Phenyl, Tolyl, Benzyl und $C_5$- bis $C_8$-Cycloalkyl ;

$R^2$ = einen zweiwertigen, von äthylenischen Doppelbindungen freien Kohlenwasserstoffrest mit drei bis acht Kohlenstoffatomen ;

n = Null, 1 oder 2 und

X = Chlor, Brom oder Jod,

mit tertiären Aminen der Formel

$$R^3NR^4R^5 \qquad (II)$$

in der

$R^3$, $R^4$ und $R^5$ gleich oder verschieden sind und je einen Alkylrest oder Benzyl bedeuten, wobei die Alkylreste insgesamt bis zu 30 Kohlenstoffatome enthalten, oder daß $R^4$ und $R^5$ zusammen mit dem Stickstoffatom sowie gegebenenfalls einem weiteren Heteroatom ausgewählt aus der Gruppe Sauerstoff, Stickstoff und Schwefel einen einwertigen Rest mit drei bis sieben —$CH_2$-Gruppen im heterocyclischem Ring bedeuten, oder daß $R^5$ einen $C_3$- bis $C_{12}$-Cycloalkylrest bedeutet, ist dadurch gekennzeichnet, daß man in wässrigem Medium bei Temperaturen von Zimmertemperatur bis 300 °C im Molverhältnis von I zu II zwischen 1 : 0,8 und 1 : 1,2 und gegebenenfalls unter Druck arbeitet.

Das Symbol $R^2$ umfaßt als Brückenglied nicht nur verzweigte und unverzweigte aliphatische zweiwertige Kohlenwasserstoffe des Typs $C_nH_{2n}$ (n = 3 bis 8), sondern auch gegebenenfallss substituierte Phenylenreste wie beispielsweise solche der Formeln $—CH_2—Ph—$, $—CH_2—Ph—CH_2—$, $—Ph(CH_3)—$, $—Ph(CH_3)_2—$ und $—Ph(C_2H_5)—$ (Ph = Phenylengerüst).

Als Amine der Formel II sind auch cyclische Amine geeignet, wobei das Stickstoffatom zusammen mit den Resten $R^4$ und $R^5$ einen heterocyclischen Ring, der gegebenenfalls noch ein weiteres Heteroatom

(Stickstoff, Sauerstoff oder Schwefel) aufweisen kann, bildet. Die heterocyclischen Ringe enthalten 3 bis 7 —$CH_2$-Gruppen. Vorgezogen werden für $R^3$, $R^4$ und $R^5$ Alkylgruppen beginnend mit Methyl, Äthyl, die gleich oder verschieden sein können. Die Summe der Kohlenstoffatome der Alkylgruppen beträgt insgesand bis zu 30 Kohlenstoffatomen.

Es ist besonders zweckmäßig und mit Vorteilen verbunden, die Umsetzung bei Temperaturen von Rückflußtemperatur bis zu 200 °C bei einem Molverhältnis der oben genannten Verbindung I zur genannten Verbindung II von 1 : 1 und gegebenenfalls unter Druck bis 200 bar auszuführen. Vorzugsweise wird bei Normaldruck gearbeitet sowie gegebenenfalls bei Drucken von 1 bis 25 bar. Die Reaktionszeit beträgt im allgemeinen in Abhängigkeit von den Reaktionstemperaturen etwa 15 Minuten bis mehrere Stunden wie etwa bis 70 Stunden bzw. entsprechende Tage.

Der Gehalt der erfindungsgemäßen wässrigen Lösung an kationischen Organosiliciumverbindungen kann zwischen 0,01 und etwa 95 Gewichtsprozent schwanken, je nach dem gewünschen Verwendungszweck und in Abhängigkeit von den Ausgangsverbindungen bzw. von den Eingenschaften der entstehenden Umsetzungsprodukte, insbesondere deren Löslichkeiten. Selbstverständlich können entstandene konzentrierte Lösungen auf einen gewünschten Gehalt verdünnt werden.

Bezüglich der Molverhältnisse wird vorzugsweise ein Molverhältnis der genannten Ausgangsverbindungen I zu II von 1 : 1 eingestellt. Ein Überschuß oder auch ein Unterschuß an tertiärem Amin in den angegebenen Grenzen ist möglich. Insbesondere ein Überschuß an Amin ist dann zweckmäßig, wenn ein $p_H$-Wert des Reaktionsgemisches oberhalb 7 angestrebt wird bzw. wenn es vorteilhaft für den Ablauf der Synthese ist. Überschüssiges Amin kann z. B. nach beendeter Synthese durch Einblasen von Luft in das Reaktionsgefüß entfernt werden wie insbesondere beim Einsatz von überschüssigem Trimethylamin. Um einen $p_H$-Wert unterhalb 7 zu erreichen oder um am Umsetzungsprodukt teilweise noch die —C—X Funktion zu bewahren, kann ein Unterschuß an Amin zur Anwendung kommen.

Als Ausgangsverbindung für die erfindungsgemäße Synthese kommen die folgenden Silane und Amine infrage.

3-Chlorpropyltrimethoxy-, -triäthoxy- und tripropoxysilan, 3-Jodpropyldimethyläthoxysilan, 3-Chlorpropylcyclohexyldiäthoxysilan, 3-Brompropyldiäthylcyclohexoxysilan, 3-Chlorpropylcyclopentyldimethoxysilan, 3-Jodpropyltriäthoxysilan, 3-Chlorisobutyltrimethoxysilan, 3-Chlorisobutyltriäthoxysilan, 3-Bromisobutyltrimethoxysilan, 4-Brom-n-butyltriäthoxysilan, 4-Chlor-n-butyldiäthoxycyclopentylsilan, 4-Jod-3-methylbutyldimethoxyphenylsilan, 5-Chlor-n-pentyltri-n-butoxysilan, 5-Brom-n-pentyltriäthoxysilan, 4-Brom-3-methylbutyldimethoxyphenylsilan, 5-Brom-n-pentyltri-n-butoxysilan, 5-Chlor-n-pentyltriäthoxysilan, 5-Jod-4-methylpentyltris (methoxymethoxy) silan, 6-Chlor-n-hexyläthoxydimethylsilan, 6-Brom-n-hexylpropyldipropoxysilan, 6-Jod-n-hexyldi-n-butoxyäthylsilan, 6-Chlor-n-hexyldiäthoxyäthylsilan, 7-Chlor-n-heptyltriäthoxysilan, 7-Chlor-n-heptyldimethoxycycloheptylsilan, 7-Brom-n-heptyldiäthoxycyclooctylsilan, 8-Chlor-n-octyltriäthoxysilan, 8-Brom-n-octyldimethylcyclohexoxysilan, 8-Jod-n-octylcyclooctoxydimethylsilan, 3-Chlorpropyldiäthoxyphenylsilan, 3-Chlorpropylmethoxyäthoxybenzysilan, 3-Brompropyldimethoxybenzylsilan, 3-Jodpropyldimethoxy-p-tolylsilan, p-Chlorphenyltrimethoxysilan, p-Chlorbenzyltriäthoxysilan und Chlormethyl-p-methyl-phenyl-trimethoxysilan.

Verwendbare tertiäre Amine sind u. a. Trimethylamin, Triäthylamin, Triisopropylamin, Tri-n-propylamin, Tribenzylamin, Dimethyläthylamin, Dimethyl-n-butylamin, Dimethyl-n-hexylamin, Diäthyl-n-octylamin, Dimethyldodecylamin, Dimethylpentadecylamin, Diäthyloctadecylamin, Dimethylheptadecylamin, Diäthyltetradecylamin, Dimethylhexacosylamin, Methyläthylisopropylamin, Methyläthylbenzylamin, Diäthyldecylamin, Methyldipentylamin, Methyläthylheptylamin, Methyläthylnonylamin, Cyclopropyldimethylamin, Cyclobutyldiäthylamin, Cyclopentyldi-n-propylamin, Cyclohexyldimethylamin, Cyclohexyldiäthylamin, Cyclohexylmethyläthylamin, Cycloheptyldimethylamin, Cyclooctyldiäthylamin, Cyclohexyldioctylamin, Cyclononyldimethylamin, Cyclodecyldiäthylamin, Cycloundecyldimethylamin, Cyclododecyldiäthylamin, N-Methylpyrrolidin, N-Äthylpyrrolidin, N-Isopropylpyrrolidin, N-Benzylpyrrolidin, N-Methylpiperidin, N-Äthylpiperidin. N-n-Propylpiperidin, N-Benzylpiperidin, N-Methylmorpholin. N-Äthylmorpholin. N-n-Butylmorpholin, N-Benzylmorpholin, N-Methylimidazolidin. N-Äthylimidazolidin, N-n-Pentylimidazolidin, N-Benzylimidazolidin, N-Methylpiperazin, N-Äthylpiperazin, N-Isopropylpiperazin, N-Benzylpiperazin, N-Methylthiazolidin, N-Äthylthiazolidin, N-Methyloxazolidin, N-Methyltetrahydro-1,4-thiazin, N-Äthyltetrahydro-1,4-thiazin, N-Benzyltetrahydro-1,4-thiazin, N-Methylperhydroacepin, N-Methylhexamethylenimin, N-Äthylperhydroacepin, N-Benzylperhydroacepin, N-Methylperhydrooxin (= N-Methylheptamethylenimin), N-Isopropylperhydroocin, N-Benzylperhydroocin, N-Äthyltetramethylenimin, N-Methylpentamethylenimin, N-Äthylpentamethylenimin und N-Benzylpentamethylenimin.

In wässrigem Medium bedeutet im Zusammenhang mit der vorliegenden Erfindung, daß die Synthese vorzugsweise mit nur Wasser angesetzt wird, daß aber in manchen Fällen zweckmäßigerweise auch Wasser im Gemisch mit üblichen, mit Wasser bei den Reaktionsbedingungen vollständig mischbaren, organischen Flüssigkeiten verwendet wird, wobei die obere Grenze des Anteils an organischer Flüssigkeit in dem eingesetzten Gemisch bei 90 Gewichtsprozent, vorzugsweise bei 60 Gewichtsprozent liegt. Nach Ende der Reaktion ist der Anteil an organischer Flüssigkeit im allgemeinen durch die Hydrolyse der Alkoxygruppen des eingesetzten Silans noch weiter erhöht. Als organische Flüssigkeiten kommen zunächst niedere aliphatische Monoalkohole infrage, also Methanol, Äthanol, n-Propanol, Isopropanol, Butanole. Pentanole. Hexanole, ferner kommen Methoxyäthanol, Äthoxyäthanol, Aceton, Tetrahydrofuran. N. N-Dimethylformamid, N-Methylpyrrolidon, Nitromethan und Dioxan infrage. Beispielsweise sind Wasser/Alkohol-Gemische nützlich. wenn langkettige Silane und bzw. oder langkettige Amine zum Einsatz kommen.

Da zur Ausführung der Synthese Verbindungen mit Alkoxysilylgruppen eingesetzt werden, reagieren in wässriger Lösung zumindest teilweise auch diese Gruppen unter Abspaltung von Alkoholen und Bildung von Siloxanen. So entstehen in Abhängigkeit von den Eingenschaften der Ausgangsverbindungen und von den Verfahrensbedingungen Siloxane oder Gemische von Siloxanen und Silanen. So ist es bekannt, daß die Alkoxygruppen je leichter hydrolytisch abgespalten werden je kürzer die Alkylkette ist.

Da die erfindungsgemäße Synthese eine Zeitreaktion ist, wobei ein Ammoniumsalz entsteht, kann das Ende der Reaktion in besonders zweckmäßiger Weise durch gewichtsanalytische Bestimmung des Halogenidgehaltes ($Hal^-$) festgestellt werden. Wenn also dieser Halogenidgehalt, beispielsweise durch Titration mit Silbernitrat bestimmt, bei steigender Reaktionszeit noch ansteigt, ist die Reaktion noch nicht beendet. Erreicht der Halogenidgehalt, beispielsweise als $Cl^-$-Gehalt bestimmt, den berechneten Endwert oder nahezu den Endwert, so ist die Reaktion praktisch beendet. Dabei muß sichergestellt sein, daß der analytisch erfaßte Wert — bei richtiger Auswahl der Analysenmethode — nicht den (anfangs noch vorhandenen) nicht-ionischen Halogengehalt mit einschließt, sondern lediglich den jeweiligen anionischen Halogenidgehalt umfaßt.

Die erfindungsgemäßen wässrigen Lösungen der kationischen Organosiliciumverbindung, gleich ob Siloxane oder Gemische von Siloxanen und Silanen, finden direkte Verwendung z. B. zur Beschichtung von oxidischen anorganischen Trägermaterialien oder als Flotationshilfsmittel bzw. Flotationsmittel für Erze, insbesondere Erze oxidischer Natur, welche z. B. an der Oberfläche Hydroxylgruppen tragen, oder sie können als Zwischenprodukte zu weiterführenden Synthesen eingesetzt werden. Selbstverständlich können die kationischen Organosiliciumverbindungen auch isoliert und weiterverwendet werden.

Die folgenden Beispiele sollen die Erfindung erläutern.

### Beispiel 1

1,20 kg (5,00 Mol) 3-Chlorpropyltriäthoxysilan (CLPTES) und 985,2 g einer 30-gewichtsprozentigen, wässrigen Trimethylaminlösung (entsprechend 5,00 Mol Trimethylamin) werden in einem 5 Liter fassenden Stahlautoklaven 3 1/2 Stunden auf 120 °C erhitzt. Man erhält eine klare, farblose Lösung von abgerundet 68,5 Gewichtsprozent Gehalt an kationischen Umsetzungsprodukt, dessen durchschnittlicher Chloridgehalt $Cl^-$ zu 8,19 Gewichtsprozent bestimmt wurde, verglichen mit berechneten 8,10 Gewichtsprozent. Die NMR-$C^{13}$-Analyse (in Wasser mit $d_8$-Dioxan als Standard) ergab einen gemessenen Wert $\delta(—NMe_3^{\oplus})$ von 53,8 ppm [der Wert $\delta(—NMe_3^{\oplus})$ stellt die chemische Verschiebung der Methylengruppen, die die Ammoniumgruppe trägt, dar, wobei Me Methyl bedeutet].

### Beispiel 2

15 Liter wässrige 45-gewichtsprozentige Trimethylaminlösung (= 99,35 Mol) und 23,92 kg CLPTES werden in einem 45 Liter fassenden, innen emaillierten Druckbehälter unter dem im Druckbehälter sich einstellenden Eigendruck des Reaktionsgemisches für zwei Stunden auf 130 °C erhitzt. Es entsteht eine klare, nur geringfügig angefärbte Lösung des Umsetzungsproduktes mit der Teilformel $\geqq Si—(CH_2)_3—N^+(CH_3)_3\ Cl^-$ mit einem Gehalt an kationischem Umsetzungsprodukt von etwa 80 Gewichtsprozent. Der analytisch bestimmte Chloridgehalt ($Cl^-$) beträgt 9,41 Gewichtsprozent (berechneter Chloridgehalt 9,46 Gewichtsprozent).

### Beispiel 3

Es werden 1,20 kg (5,00 Mol) CLPTES, 506 g (5,00 Mol) Triäthylamin und 732,8 Wasser in einem 5 Liter fassenden Autoklaven aus Stahl fünf Stunden auf 120 °C erhitzt. Die entstandene klare, farblose Lösung enthält rund 70 Gewichtsprozent eines kationischen Umsetzungsproduktes mit der Gruppierung $\geqq Si—(CH_2)_3—N^+(C_2H_5)_3\ Cl^-$. Analytisch bestimmter Chloridgehalt 7,12 Gewichtsprozent (berechnet 7,26 Gewichtsprozent).

### Beispiel 4

664,5 g 3-Jodpropyltriäthoxysilan und 394,1 g einer 30-gewichtsprozentigen wässrigen Lösung von Trimethylamin (enthaltend 118,2 g = 2,00 Mol) werden drei Stunden unter Rückfluß und Normaldruck erhitzt. Es entsteht ein klare, farblose Lösung eines kationischen Umsetzungsproduktes mit der Gruppierung $\geqq Si—(CH_2)_3—N^+(CH_3)_3\ J^-$, die etwa 73,9 Gewichtsprozent des Umsetzungsproduktes enthält. Der Jodidgehalt wird analytisch mit 23,72 Gewichtsprozent bestimmt (berechnet 23,98 Gewichtsprozent).

### Beispiel 5

Es werden 664,5 g 3-Jodpropyltriäthoxysilan, 202,4 g Triäthylamin und 371,5 g Wasser in einem mit

Thermometer, Rührer und Rückflußkühler versehenen Glaskolben von 2 Liter Fassungsvermögen 2 1/2 Stunden unter Rückfluß erhitzt. Das erhaltene Umsetzungsprodukt mit der Gruppierung $\geqq Si-(CH_2)_3-N^+(C_2H_5)_3\ J^-$ ist in der klaren und farblosen Lösung zu etwa 70 Gewichtsprozent enthalten. Der analytisch bestimmte Jodidgehalt beträgt 20,41 Gewichtsprozent (berechnet 20,49 Gewichtsprozent).

Beispiel 6

426 g (2,00 Mol) 3-Chlorpropyldiäthoxymethylsilan und 544 g Wasser werden in einen 2 Liter fassenden Stahlautoklaven vorgelegt. Danach werden 148 g (rund 2,50 Mol) Trimethylamin hinzugegeben. Die Umsetzung wird durch Erhitzen auf 120 °C innerhalb von drei Stunden unter dem Eingendruck des Reaktionsgemisches bewirkt. Anschließend wird das überschüssige Amin durch Einblasen von Luft entfernt. Anstelle von Luft kann Stickstoff benuzt werden. Die erhaltene klare und farblose Lösung von rund 50 Gewichtsprozent des kationischen Umsetzungsproduktes mit der Gruppierung $\geqq Si(CH_3)(CH_2)(CH_2)_3-N^+(CH_3)_3\ Cl^-$, welches einen direkt titrierbaren Chloridgehalt von 6,45 Gewichtsprozent (berechneter Chloridgehalt 6,52 Gewichtsprozent) aufweist, kann direkt oder nach Verdünnung mit Wasser und bzw. oder Äthanol der Verwendung zugeführt werden.

Beispiel 7

463,4 g (2,50 Mol) Tri-n-butylamin und 355 g eines Wasser/Äthanol-Gemisches (Gewichtsverhältnis 1 : 1) werden in einem 2 Liter fassenden Stahlautoklaven vorgelegt. Nun werden 602 g (2,50 Mol) CLPTES hinzugegeben. Die Erhitzung erfolgt 60 Stunden auf 130 °C unter dem sich einstellenden Eigendruck des Reaktionsgemisches. Es ist eine leicht hellgelbe, klare Lösung des Umsetzungsproduktes mit der Teilformel $\geqq Si-(CH_2)_3-N^+(n-C_4H_9)_3\ Cl^-$ mit einem Gehalt an kationischen Umsetzungsprodukt von etwa 75 Gewichtsprozent entstanden. Der analytisch bestimmte Chloridgehalt betrug 6,10 Gewichtsprozent (berechneter Gehalt 6,24 Gewichtsprozent).

Beispiel 8

602 g (2,50 Mol) CLPTES, 534 g (2,50 Mol) Dimethyldodecylamin und 284 g eines Wasser/Äthanol-Gemisches im Gewichtsverhältnis 2 : 1 werden in einem 2 Liter fassenden Stahlautoklaven unter dem sich einstellenden Eigendruck des Reaktionsgemisches für 6 Stunden auf 130 °C erhitzt. Man erhält eine klare, hellgelbe Lösung des Umsetzungsproduktes mit der Teilformel $\geqq Si-(CH_2)_3-N^+(CH_3)_2(C_{12}H_{25})\ Cl^-$ mit einem Gehalt an kationischem Umsetzungsprodukt von 80 Gewichtsprozent. Der analytisch bestimmte Chloridgehalt betrug 6,25 Gewichtsprozent (berechneter Gehalt 6,24 Gewichtsprozent).

Zum Vergleich und zum Nachweis der Bedeutung von Wasser als Reaktionsbeschleuniger wurden nunmehr 48,2 g CLPTES (0,20 Mol) und 42,7 g Dimethyldodecylamin (0,20 Mol) in 20 ml Äthanol in einem Glasautoklaven für 24 Stunden auf 130 °C erhitzt. Nach der $Cl^-$-Analyse ist die Umsetzung nur zu etwa 60 % erfolgt.

Beispiel 9

602 g (2,50 Mol) CLPTES, 708,9 g (2,50 Mol) Heptadecyldimethylamin und 1 310,9 g eines Wasser/Äthanol-Gemisches (Gewichtsverhältnis 1 : 1) werden in einem 5 Liter fassenden Stahlautoklaven für 6 Stunden auf 150 °C erhitzt. Man erhält eine leicht hellgelbe, klare Lösung des Umsetzungsproduktes mit der Teilformel $\geqq Si-(CH_2)_3-N^+(CH_3)_2(C_{17}H_{35})\ Cl^-$ und mit einem Gehalt an kationischem Umsetzungsprodukt von etwa 50 Gewichtsprozent. Der analytisch bestimmte Chloridgehalt betrug 3,25 Gewichtsprozent (berechneter Wert 3,38 Gewichtsprozent).

Beispiel 10

616,9 g (2,50 Mol) p-Chlormethylphenyltrimethoxysilan, 253,0 g (2,50 Mol) Triäthylamin und 869,9 g eines Wasser/Methanol-Gemisches im Gewichtsverhältnis 1 : 1 werden in einem 2 Liter fassenden Stahlautoklaven für 5 Stunden auf 150 °C erhitzt. Es entsteht eine leicht gelbliche Lösung des Umsetzungsproduktes mit der Teilformel

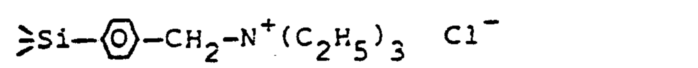

und mit einem Gehalt an kationischem Umsetzungsprodukt von etwa 50 Gewichtsprozent. Der analytisch bestimmte Chloridgehalt betrug 5,21 Gewichtsprozent (berechneter Wert 5,09 Gewichtsprozent).

Beispiel 11

In einem 2 Liter Stahlautoklaven werden 202,3 g (2,00 Mol) N-Methylmorpholin und 772,8 g Wasser

vorgelegt. Nach Zugabe von 570,5 g (2,00 Mol) 3-Brompropyltriäthoxysilan erhitzt man für 2 Stunden unter dem sich einstellenden Eigendruck des Reaktionsgemisches auf 130 °C. Man erhält eine klare, leicht hellgelbe Lösung des Umsetzungsproduktes mit der Teilformel

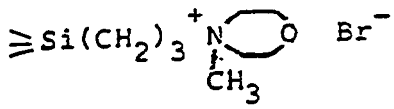

und mit einem Gehalt an kationischem Umsetzungsprodukt von etwa 50 Gewichtsprozent. Der analytisch bestimmte Bromidgehalt betrug 10,32 Gewichtsprozent (berechneter Wert 10,34 Gewichtsprozent).

Die Bestimmungen des Halogenidgehaltes erfolgten potentiometrisch (siehe JANDER, JAHR und KNOLL « Maßanalyse, Theorie und Praxis der klassischen und der elektrochemischen Titrierverfahren, Seiten 301 bis 305 ». Sammlung Göschen, Band 221 und 221 a ; Verlag Walter de Gruyter & Co. Berlin 1969). Weitere Bestimmungsmöglichkeiten siehe a. a. O. Seiten 222 bis 228.

**Ansprüche**

1. Verfahren zum Herstellen von wässrigen Lösungen kationischer Organosiliciumverbindungen durch Umsetzung von Silylhalogeniden der Formel

$$(RO)_{3-n}R_n^1Si—R^2—X \qquad (I)$$

in der bedeuten

$R = C_1$- bis $C_5$-Alkyl, Phenyl und $C_5$- bis $C_8$-Cycloalkyl ;

$R^1 = C_1$- bis $C_5$-Alkyl, Phenyl, Tolyl, Benzyl und $C_5$- bis $C_8$-Cycloalkyl ;

$R^2$ = einen zweiwertigen, von äthylenischen Doppelbindungen freien Kohlenwasserstoffrest mit drei bis acht Kohlenstoffatomen ;

n = null, 1 oder 2 und

X = Chlor, Brom oder Jod,

mit tertiären Aminen der Formel

$$R^3NR^4R^5 \qquad (II)$$

in der

$R^3$, $R^4$ und $R^5$ gleich oder verschieden sind und je einen Alkylrest oder Benzyl bedeuten, wobei die Alkylreste zusammen bis zu 30 Kohlenstoffatome enthalten, oder daß $R^4$ und $R^5$ zusammen mit dem Stickstoffatom sowie gegebenenfalls einem weiteren Sauerstoff-, Stickstoff- und Schwefelatom einen einwertigen fünf- bis achtgliedrigen heterocyclischen Rest mit drei bis sieben $—CH_2$-Gruppen im heterocyclischem Ring bedeuten, oder daß $R^5$ einen $C_3$- bis $C_{12}$-Cycloalkylrest bedeutet, dadurch gekennzeichnet, daß man in wässrigem Medium bei Temperaturen von Zimmertemperatur bis 300 °C bei einem Molverhältnis der Verbindung I zur Verbindung II zwischen 1 : 0,8 und 1 : 1,2 und gegebenenfalls unter Druck arbeitet.

2. Verfahren nach Anspruch 1, dadurch gekennzeichnet, daß man die Umsetzung bei Temperaturen von Rückflußtemperatur bis zu 200 °C bei einem Molverhältnis der Verbindung I zur Verbindung II von 1 : 1 und gegebenenfalls unter einem Druck bis 200 bar ausführt.

**Claims**

1. A process for the production of aqueous solutions of cationic organo silicon compounds by reacting silyl halides corresponding to the formula

$$(RO)_{3-n}R_n^1Si—R^2—X, \qquad (I)$$

wherein

R represents $C_1$-$C_5$ alkyl, phenyl and $C_5$-$C_8$ cycloalkyl ;

$R^1$ represents $C_1$-$C_5$ alkyl, phenyl, tolyl, benzyl and $C_5$-$C_8$ cycloalkyl ;

$R^2$ represents a divalent hydrocarbon radical, having from three to eight carbon atoms, which is free of ethylenic double bonds ;

n represents chlorine, bromine or iodine,

X represents chlorine, bromine or iodine,

with tertiary amines corresponding to the formula

$$R^3NR^4R^5, \qquad (II)$$

wherein

$R^3$, $R^4$ and $R^5$ are the same or different and represent in each case an alkyl radical or benzyl, the alkyl radicals together containing up to 30 carbon atoms, or $R^4$ and $R^5$ together with the nitrogen atom and optionally with a further oxygen, nitrogen and sulphur atom represent a monovalent, from five to eight membered heterocyclic radical, having from three to seven $—CH_2$-groups in the heterocyclic ring, or $R^5$ represents a $C_3$-$C_{12}$ cycloalkyl radical, characterised in that the reaction is carried out in aqueous medium at a temperature ranging from room temperature to 300 °C, at a mol ratio of compound I to compound II of from 1 : 0.8 to 1 : 1.2 and optionally under pressure.

2. A process according to claim 1, characterised in that the reaction is carried out at a temperature ranging from reflux temperature to 200 °C, at a mol ratio of compound I to compound II of 1 : 1 and optionally, under pressure of up to 200 bars.

**Revendications**

1. Procédé de préparation de solutions aqueuses de composés cationiques d'organosilicium, par réaction d'halogénures de silyl répondant à la formule

$$(RO)_{3-n}R_n^1Si—R^2—X \qquad (I)$$

où les symboles signifient

$R$ = alcoyle en $C_1$ à $C_5$, phényle et cycloalcoyle en $C_5$ à $C_8$ ;

$R^1$ = alcoyle en $C_1$ à $C_5$, phényle, tolyle, benzyle, et cycloalcoyle en $C_5$ à $C_8$ ;

$R^2$ = un reste hydrocarbure bivalent, exempt de double liaison éthylénique avec 3 à 8 atomes de C ;

n = 0, 1 ou 2 et

X = chlore, brome ou iode,

avec des amines tertiaires de formule

$$R^3NR^4R^5 \qquad (II)$$

dans laquelle

$R^3$, $R^4$ et $R^5$ peuvent être semblables ou différents et représentent chacun un reste alcoyle ou benzyle, les restes alcoyle pouvant contenir au total jusqu'à 30 atomes de carbone, ou $R^4$ et $R^5$, en commun avec l'atome d'azote ainsi qu'éventuellement un autre atome d'oxygène, d'azote ou de soufre, représentent un reste hétérocyclique monovalent comportant 5 à 8 membres, avec 3 à 7 groupes $—CH_2—$ dans l'anneau hétérocyclique, ou $R^5$ représente un reste cycloalcoyle avec 3 à 12 atomes de C, procédé caractérisé en ce que l'on opère en milieu aqueux, à des températures comprises entre la température ambiante et 300 °C, avec un rapport molaire du composé I au composé II compris entre 1 : 0,8 et 1 : 1,2 et éventuellement sous pression.

2. Procédé selon la revendication 1, caractérisé en ce que l'on effectue la réaction à des températures comprises entre la température de reflux et 200 °C, avec un rapport molaire du composé I au composé II de 1 : 1 et éventuellement sous une pression pouvant aller jusqu'à 200 bars.